# FASCICULE DE BREVET EUROPEEN

(11) **EP 3 759 019 B1**
(45) Date de publication et mention de la délivrance du brevet: **21.08.2024**
(21) Numéro de dépôt: 19706668.1
(22) Date de dépôt: 26.02.2019
(51) Int. Cl.: B64D 17/52, B64D 17/46

(54) **DISPOSITIF DE DÉVERROUILLAGE D'UN SYSTÈME DE FERMETURE D'UN CONTENANT AU MOYEN D'UN LIEN ET CONTENEUR DOTÉ D'UN TEL DISPOSITIF DE DÉVERROUILLAGE**
ENTRIEGELUNGSVORRICHTUNG EINES BEFESTIGUNGSMITTELS EINES BEHÄLTERS MITTELS EINES VERBINDUNGSGLIEDS UND BEHÄLTER MIT EINER DERARTIGEN ENTRIEGELUNGSVORRICHTUNG
UNLOCKING DEVICE OF A FASTENING MEANS OF A CONTAINER BY MEANS OF A LINK AND CONTAINER PROVIDED WITH SUCH AN UNLOCKING DEVICE

(30) Priorité: 28.02.2018 FR 1851758
(43) Date de publication de la demande: 06.01.2021
(73) Titulaire: Safran Aerosystems, 78370 Plaisir (FR)
(72) Inventeur: SUZE, Gaël, 78373 PLAISIR (FR)
(74) Mandataire: Casalonga
(86) Numéro de dépôt international: PCT/EP2019/054712
(87) Numéro de publication internationale: WO 2019/166423

(56) Documents cités:
- EP-A2- 2 404 827
- CH-A- 149 873
- DE-B- 1 073 317
- GB-A- 131 659
- US-A- 3 032 303
- US-A- 4 898 346

## Description

La présente invention concerne, de manière générale, un dispositif de déverrouillage pour un système de fermeture d'un contenant de parachute fermé au moyen d'un lien, de type cordage ou sangle, tendu entre des oeillets de fermeture.

L'invention n'est toutefois pas limitée à un dispositif de verrouillage d'un système de fermeture d'un conteneur de parachute, de sorte que l'on ne sort pas du cadre de l'invention lorsque le dispositif de déverrouillage agit sur un système de fermeture utilisé dans d'autres applications, telles que, par exemple, dans le domaine du nautisme.

Dans le domaine du parachutisme, un parachute est traditionnellement placé à l'état plié dans un conteneur comportant des rabats pourvus chacun d'au moins un oeillet et fermé au moyen d'un lien, également désigné par le terme de bouclette, qui chemine entre les oeillets et qui comporte une boucle d'extrémité accessible de l'extérieur du conteneur et dans laquelle est insérée une broche de fermeture, également désignée par le terme d'aiguille, pour verrouiller les rabats en position fermée.

La tension exercée par la bouclette sur la broche de fermeture est fonction du réglage d'une longueur de la bouclette, d'un volume du parachute compacté dans le conteneur et, éventuellement, d'une poussée exercé par un ressort d'un dispositif extracteur placé dans le conteneur entre le parachute compactée et les rabats du conteneur.

La longueur de la bouclette peut être aisément préréglée. Par contre, le volume du parachute compactée ainsi que la poussée du dispositif extracteur sont variables et dépendent de divers paramètres, tels que la température, l'hygrométrie, la répartition du volume en fonction du coup de main d'une personne ayant plié le parachute, du temps depuis le dernier pliage du parachute, ...

En conséquence, il n'est pas possible de prévoir un réglage idéal de la longueur de la bouclette de manière à obtenir une tension maîtrisée de la bouclette et, par conséquent, un effort d'actionnement sur une poignée d'ouverture également maîtrisé.

Un réglage idéal de la longueur de la bouclette n'est donc pas répétable et non pérenne pendant toute la durée de pliage d'un parachute, les périodicités de pliage étant de l'ordre d'un an.

Or, une bouclette de fermeture réglée trop longue induit des risques de désengagement inopiné de la broche par manque de tension et, par conséquent, des risques d'ouverture intempestive du conteneur de parachute.

Au contraire, une bouclette trop courte risque d'engendrer des efforts d'actionnement de la poignée d'ouverture trop importants.

Par ailleurs, lorsque l'on utilise un dispositif extracteur, on cherche généralement à concevoir les extracteurs de manière avoir des ressorts de plus en plus puissants pour qu'ils permettent de propulser le parachute au-delà d'une zone dépressionnaire engendrée lors de la chute d'un parachutiste équipé du parachute.

Or, une augmentation de la puissance du ressort s'accompagne d'une augmentation de la tension de la bouclette de fermeture et d'une augmentation consécutive de l'effort d'actionnement de la poignée d'ouverture.

Le but de l'invention est donc de pallier ces divers inconvénients et de proposer un dispositif de déverrouillage d'un système de fermeture d'un conteneur au moyen d'un lien qui facilite le déverrouillage du système de fermeture, même lorsque la tension du lien augmente.

Un autre but de l'invention est de proposer un dispositif de déverrouillage d'un système de fermeture d'un conteneur de parachute à commande manuelle qui facilite l'extraction du parachute même lorsque la tension s'exerçant sur la bouclette de fermeture s'accroît.

L'invention a donc pour objet, selon un premier aspect, un dispositif de déverrouillage d'un système de fermeture d'un conteneur au moyen d'un lien, de type cordage ou sangle, en particulier un lien tendu entre des oeillets, comprenant un outil tranchant apte à couper le lien pour déverrouiller le système de fermeture.

Ce système de déverrouillage comporte un organe d'actionnement lié à l'outil tranchant, l'organe d'actionnement étant manipulable manuellement par un utilisateur pour provoquer le déplacement de l'outil tranchant dans une position de sectionnement dudit lien.

Ainsi, grâce à l'utilisation d'un outil tranchant pour couper le lien du système de fermeture, on constate que l'effort à appliquer sur l'organe d'actionnement pour déverrouiller le système de fermeture diminue lorsque la tension du lien augmente.

De préférence, le système de déverrouillage comprend en outre un élément de liaison entre l'organe d'actionnement et l'outil tranchant.

L'outil tranchant comprend au-moins une lame, un porte-lame et une navette mobile.

De préférence, le porte-lame est monté sur la navette mobile.

Avantageusement, la navette mobile est liée à l'organe d'actionnement.

L'outil tranchant comprend des moyens de rétention agissant sur le porte-lame à l'encontre d'un effort exercé par l'organe d'actionnement.

De préférence, les moyens de rétention comprennent un poussoir comprenant une bille qui s'engage dans une gorge pratiquée dans la navette mobile.

Avantageusement, le poussoir comprend un ressort sollicitant la bille dans la gorge.

L'invention a également pour objet, selon un deuxième aspect, un conteneur comprenant au moins un rabat déployable en position d'ouverture du conteneur et susceptible d'être rabattu en position de fermeture du conteneur, un système de fermeture du conteneur comprenant un lien, de type cordage ou sangle, en particulier un lien tendu entre des oeillets pratiqués dans le rabat ayant une première extrémité liée au conteneur et une extrémité opposée dotée d'une bouclette d'extrémité, et une broche de verrouillage s'engageant dans la bouclette d'extrémité, ce conteneur comportant un dispositif de déverrouillage tel que défini ci-dessus.

Avantageusement, le conteneur comprend en outre un dispositif extracteur agissant sur le rabat pour le solliciter en position déployée.

Dans un mode de réalisation, le dispositif de verrouillage est monté sur le rabat du conteneur, dans l'axe d'un oeillet du rabat.

L'invention a enfin pour objet un conteneur tel que défini ci-dessus, qui constitue un conteneur pour contenir un parachute.

La présente invention sera mieux comprise et d'autres buts, caractéristiques et avantages de l'invention apparaîtront à la lecture de la description détaillée qui suit, comprenant des modes de réalisation donnés à titre illustratif en référence avec les figures annexées, présentés uniquement à titre d'exemple non limitatif, qui pourront servir à compléter la compréhension de la présente invention et l'exposé de sa réalisation et, le cas échéant, contribuer à sa définition, et faite en référence aux dessins annexés sur lesquels :
- la figure 1 est une vue schématique d'un conteneur de parachute selon l'état de la technique ;
- la figure 2 est une vue schématique d'un conteneur de parachute conforme à l'invention ;
- les figures 3 et 4 sont des vues en perspective, respectivement de dessus et de dessous, d'une partie d'un système de fermeture du conteneur, montrant une bouclette de fermeture et une broche de fermeture insérée dans la bouclette ;
- la figure 5 montre l'intérieur du système de fermeture du conteneur visible sur les figures 3 et 4 ; et
- les figures 6 et 7 sont des vues de dessous de l'intérieur du système de fermeture du conteneur, respectivement avant section d'un lien et après traction sur un organe d'actionnement et section du lien.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

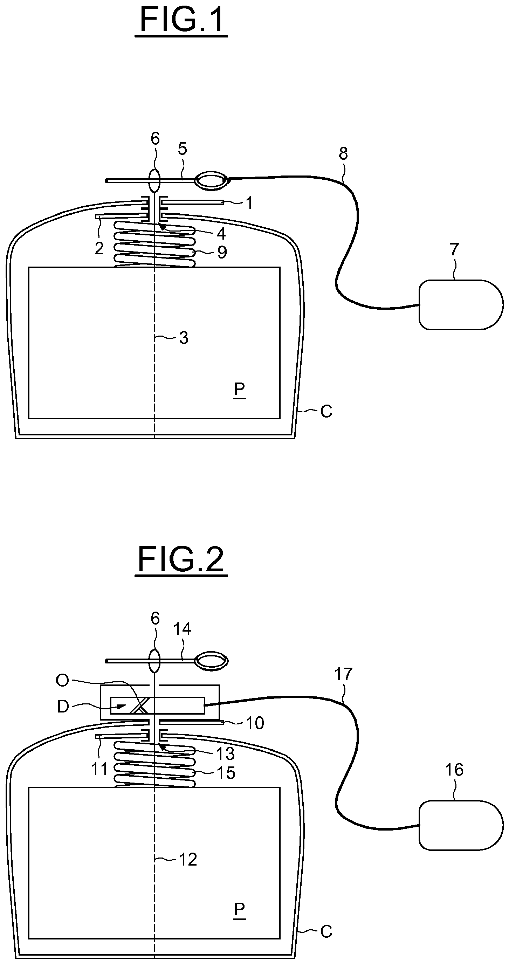

On a représenté sur la figure 1 une vue schématique d'un conteneur de parachute selon l'état de la technique.

Tel que présenté sur cette figure, un conteneur C dans lequel est stocké un parachute P plié et qui comporte au moins deux rabats 1 et 2, au moins en partie superposés lorsque le conteneur est fermé et déployables pour permettre l'extraction du parachute P.

Une bouclette 3 est fixée par une extrémité au conteneur C et chemine entre des oeillets de fermeture 4 des rabats 1 et 2.

Une broche de fermeture 5 s'insère dans une boucle d'extrémité 6 de la bouclette 3 pour verrouiller le conteneur C à l'état fermé.

La broche de fermeture 5 est reliée à une poignée d'ouverture 7 par l'intermédiaire d'un câble de commande 8.

Pour déployer le parachute, il convient d'exercer une traction sur la poignée d'ouverture 7 pour dégager la broche de fermeture 5 de la boucle d'extrémité 6 et déclencher ainsi l'ouverture du conteneur C par traction manuelle.

De plus, un dispositif extracteur 9 est placé dans le conteneur C entre le parachute P et les rabats 1 et 2 du conteneur C.

Sur la figure 2, on a représenté de manière schématique un conteneur C de parachute conforme à l'invention. Sur cette figure, on reconnaît un conteneur C dans lequel est stocké un parachute P plié et qui comporte au moins deux rabats 10 et 11, au moins en partie superposés lorsque le conteneur est fermé et susceptibles d'être déployés pour permettre l'extraction du parachute P stocké à l'état plié dans le volume interne du conteneur C.

Toutefois, la présente invention n'est pas limitée au conteneur C comportant au moins deux rabats 10 et 11. En effet, elle trouve également une application au conteneur C comportant un rabat 10 ou 11.

Une bouclette de fermeture 12 est tendue entre des oeillets 13 des rabats 10 et 11. Le nombre d'oeillets 13 présents sur un rabat 10 ou 11 n'est pas limité. Selon un mode préféré de réalisation, le rabat 10, respectivement le rabat 11, comporte un oeillet 13. Toutefois, il est parfaitement envisageable que le rabat 10, respectivement le rabat 11, comporte plusieurs oeillets 13, notamment deux oeillets 13.

De plus, la bouclette de fermeture 12 est fixée par l'une de ses extrémités au conteneur C et comprenant une extrémité opposée en forme d'une boucle d'extrémité 6, accessible de l'extérieur du conteneur C, dans lequel s'insère une broche de verrouillage 14.

Par ailleurs, la présente invention trouve également une application au conteneur C comportant des rabats 10 et 11 dépourvus d'oeillets 13 mais maintenus fermés par l'intermédiaire de la bouclette de fermeture 12.

Dans le mode de réalisation visible sur la figure 2, le conteneur C comporte intérieurement un dispositif extracteur 15, ici un dispositif extracteur à ressort, représenté de manière schématique par un ressort, placé dans le conteneur C entre le parachute P plié et les rabats 10 et 11 du conteneur C. Le dispositif extracteur 15 est optionnel.

Un tel dispositif extracteur 15 comporte, par exemple, une voilure secondaire de faibles dimensions, notamment hémisphérique, destinée à être propulsée par le ressort du dispositif extracteur 15 hors du conteneur C, lors de son ouverture, pour extraire le parachute P auquel il est lié.

Le conteneur C est par ailleurs doté d'un dispositif de déverrouillage D d'un système de fermeture du conteneur C.

Le dispositif de déverrouillage, également schématiquement représenté sur la figure 2, est, par exemple, fixé sur une face extérieure d'un rabat 10, en particulier un rabat 10 supérieur, ou intégré à ce rabat 10. Préférentiellement, le dispositif de déverrouillage est centré sur l'axe de l'oeillet 13 pratiqué dans le rabat 10, qui est généralement confondu à l'axe d'extension de la bouclette de fermeture 12. Le dispositif de déverrouillage comprend un outil tranchant O. Selon un exemple particulier de réalisation, l'outil tranchant O est lié à un organe d'actionnement 16, constitué par exemple par une poignée d'ouverture 16 manipulable manuellement par un parachutiste, pour provoquer le déverrouillage du système de fermeture du conteneur.

Dans le mode de réalisation illustré, l'organe d'actionnement 16 est lié à l'outil tranchant O par un élément souple de liaison 17, tel qu'un câble de commande.

L'outil tranchant O est déplaçable par rapport à la bouclette de fermeture 12 sous l'action de la poignée d'ouverture 16 entre une position de repos, dans laquelle il est décalé de la bouclette de fermeture 12 et une position active dans laquelle il est apte à sectionner la bouclette de fermeture 12.

Le dispositif de déverrouillage est monté sur le rabat 10, sur le trajet de la bouclette de fermeture 12, entre le rabat 10 et la boucle d'extrémité 6 dans laquelle s'insère la broche de verrouillage 14, de sorte qu'une action sur l'organe d'actionnement 16 provoque un sectionnement de la bouclette de fermeture 12 sous le point de verrouillage de la broche de verrouillage 14.

L'ouverture du conteneur C s'effectue ainsi en agissant sur l'organe d'actionnement 16, par exemple constitué par la poignée d'ouverture, au lieu et place d'une action sur la broche de verrouillage 14.

Par conséquent, les efforts appliqués par la bouclette de fermeture 12 sur la broche de verrouillage 14 ne génèrent aucun effet sur l'effort nécessaire pour provoquer l'ouverture du conteneur C.

Au contraire, l'effort de traction à exercer sur l'organe d'actionnement 16 n'est plus corrélé à la tension de la bouclette de fermeture 12 qui s'exerce sur la broche de verrouillage 14.

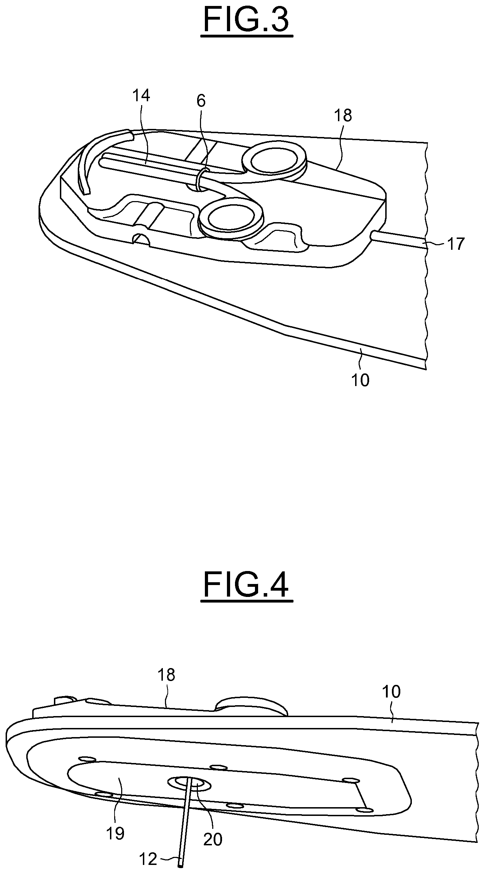

En référence aux figures 3 et 4, le dispositif de déverrouillage constitue un boîtier sectionneur comprenant une enveloppe extérieure 18 et une platine de support 19 fixées l'une sur l'autre de part et d'autre du rabat 10 sur lequel le dispositif de déverrouillage est monté. Il comporte un passage 20 pour la bouclette de fermeture 12 dans laquelle s'engage la broche de verrouillage 14.

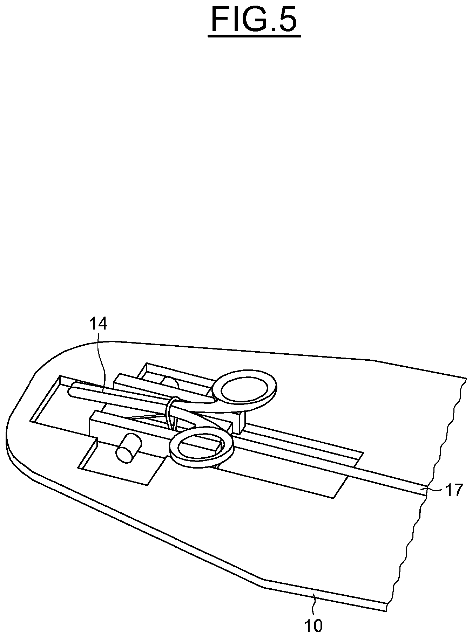

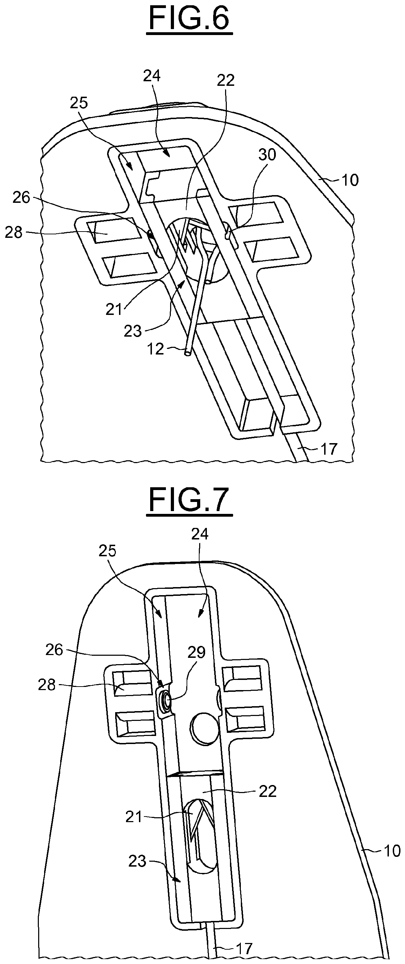

En référence à la figure 5, qui montre le boîtier sectionneur, enveloppe extérieure 18 ôtée, et aux figures 6 et 7 qui montrent le boîtier sectionneur, platine de support 19 ôtée, le dispositif de déverrouillage comporte l'outil tranchant O comprenant une ou plusieurs lames 21. Avantageusement, les lames 21 sont montées sur un porte-lame 22, lui-même préférentiellement monté sur une navette mobile 23, idéalement raccordée à l'organe d'actionnement 16, en particulier via le câble de commande 17. On notera que le câble de commande 17 est optionnel de sorte que l'organe d'actionnement 16 pourrait directement être liée à la navette mobile 23.

Dans certains exemples illustratifs qui n'entrent pas dans le cadre des revendications annexées, le porte-lame 22 est également optionnel de sorte qu'il pourrait être directement intégré à la navette mobile 23, en montant directement la ou les lames 21 de l'outil tranchant O sur la navette mobile 23.

Selon l'exemple de réalisation présenté, le boîtier sectionneur peut comporter par ailleurs un corps 24 délimitant deux coulisses 25 longitudinales. Les coulisses 25 permettent d'assurer un coulissement de la navette mobile 23 sous l'action de l'organe d'actionnement 16 entre une position d'attente dans laquelle l'outil tranchant O est décalé de la bouclette de fermeture 12 (tel que visible sur la figure 6) et une position active de sectionnement de la bouclette de fermeture 12 (tel que visible sur la figure 7).

En complément, on voit par ailleurs sur les figures 6 et 7 que le corps 24 du boîtier sectionneur peut être doté de moyens de rétention 26, agissant sur la navette mobile 23, de manière à tarer l'effort nécessaire pour provoquer le déplacement de la navette mobile 23.

Les moyens de rétention 26 comportent un ou plusieurs poussoirs, ici au nombre de deux, disposés de part et d'autre de la navette mobile dans sa position de repos.

Les poussoirs comportent, par exemple, un ressort monté dans une cage 28, avantageusement une cage cylindrique 28, agissant sur une bille 29, montée en saillie dans l'une des coulisses 25, de manière à s'engager dans une gorge 30 pratiquée latéralement dans la navette mobile 23. Il est ainsi possible de régler l'effort d'actionnement de la navette mobile 23 en agissant, soit sur la force du ressort, soit sur la profondeur, ou de manière générale sur la taille, de la gorge latérale 30.

On évite en outre tout risque de déplacement intempestif de la navette mobile 23 qui risquerait de provoquer un sectionnement consécutif de la bouclette de fermeture 12.

L'effort à appliquer sur l'organe d'actionnement 16 pour sectionner la bouclette de fermeture 12 correspond ainsi un cumul des forces de friction de la navette mobile 23 de l'outil tranchant O dans le boîtier sectionneur et des forces de résistance à la section de la bouclette de fermeture 12. Plus la tension de la bouclette de fermeture 12 est forte, plus les forces de résistance à la section de la bouclette de fermeture 12 sont faibles.

Il est donc possible de trouver un réglage de la longueur de la bouclette de fermeture 12 générant une tension suffisamment forte pour assurer un maintien constant de la broche de verrouillage et absorber les variances de volume du parachute P plié et de poussée du dispositif extracteur 15 agissant sur les rabats 10 et 11 du conteneur C tout en conservant des efforts d'actionnement de l'organe d'actionnement 16 constants car ceux-ci dépendent uniquement des forces de friction liées au boîtier sectionneur.

On notera enfin que la présente invention résulte d'un marché passé par le Ministère de la Défense-Délégation Générale pour l'Armement, qui dispose de certains droits dessus.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Dispositif de déverrouillage pour un système de fermeture d'un conteneur (C) de parachute au moyen d'un lien (12), de type cordage ou sangle, en particulier un lien tendu entre des oeillets (13), comprenant un outil tranchant (O) apte à couper le lien (12) pour déverrouiller le système de fermeture,
le dispositif comportant un organe d'actionnement (16) lié à l'outil tranchant (O), ledit organe d'actionnement étant manipulable manuellement par un utilisateur pour provoquer le déplacement de l'outil tranchant (O) dans une position de sectionnement dudit lien (12), l'outil tranchant (O) comprenant au moins une lame (21), un porte-lame (22), une navette mobile (23), et des moyens de rétention (26) agissant sur le porte-lame (22) à l'encontre d'un effort exercé par l'organe d'actionnement (16),
**caractérisé en ce que** les moyens de rétention (26) comportent un ou plusieurs poussoirs disposés de part et d'autre de la navette mobile (23) dans sa position de repos, les moyens de rétention (26) agissant sur la navette mobile (23) de manière à tarer l'effort nécessaire pour provoquer le déplacement de la navette mobile (23).

2. Dispositif de déverrouillage selon la revendication 1, comprenant en outre un élément de liaison (17) entre l'organe d'actionnement (16) et l'outil tranchant (O).

3. Dispositif de déverrouillage selon l'une des revendications 1 et 2, dans lequel le porte-lame (22) est monté sur la navette mobile (23).

4. Dispositif de déverrouillage selon l'une quelconque des revendications 1 à 3, dans lequel la navette mobile (23) est liée à l'organe d'actionnement (16).

5. Dispositif de déverrouillage selon l'une quelconque des revendications 1 à 4, dans lequel chacun des un ou plusieurs poussoirs comprend une bille (29) qui s'engage dans une gorge (30) pratiquée dans la navette mobile (23).

6. Dispositif de déverrouillage selon la revendication 5, dans lequel chacun des un ou plusieurs poussoirs comprend un ressort sollicitant la bille (29) dans la gorge (30).

7. Conteneur (C) comprenant au moins un rabat (10, 11) déployable en position d'ouverture du conteneur (C) et susceptible d'être rabattu en position de fermeture du conteneur (C), un système de fermeture du conteneur (C) comprenant un lien (12), de type cordage ou sangle, en particulier un lien tendu entre des oeillets (13) pratiqués dans le rabat, ayant une première extrémité liée au conteneur (C) et une extrémité opposée dotée d'une bouclette d'extrémité (6), et une broche de verrouillage (14) s'engageant dans la bouclette d'extrémité (6),
**caractérisé en ce qu'**il comporte un dispositif de déverrouillage selon l'une quelconque des revendications 1 à 6.

8. Conteneur selon la revendication 7, comprenant en outre un dispositif extracteur (15) agissant sur le rabat pour le solliciter en position déployée.

9. Conteneur selon l'une des revendications 7 ou 8, dans lequel le dispositif de verrouillage est monté sur le rabat (10) du conteneur (C), dans l'axe d'un oeillet du rabat.

10. Conteneur selon la revendication 7, **caractérisé en ce qu'**il constitue un conteneur pour contenir un parachute (P).

## Patentansprüche

1. Entriegelungsvorrichtung für ein Schließsystem eines Fallschirmcontainers (C) mittels eines Verbindungsglieds (12), vom Typ Leine oder Riemen, insbesondere eines Verbindungsglieds, das zwischen Ösen (13) gespannt ist, umfassend ein Schneidwerkzeug (O), das dazu ausgelegt ist, das Verbindungsglied (12) zu durchschneiden, um das Schließsystem zu entriegeln,
wobei die Vorrichtung ein Betätigungselement (16) umfasst, das mit dem Schneidwerkzeug (O) verbunden ist, wobei das Betätigungselement von einem Benutzer manuell manipuliert werden kann, um die Verschiebung des Schneidwerkzeugs (O) in eine Position zum Durchtrennen des Verbindungsglieds (12) zu bewirken, wobei das Schneidwerkzeug (O) mindestens eine Klinge (21), einen Klingenhalter (22), einen beweglichen Schlitten (23) und Haltemittel (26), die auf den Klingenhalter (22) gegen eine vom Betätigungselement (16) ausgeübte Kraft einwirken, umfasst,
**dadurch gekennzeichnet, dass** die Haltemittel (26) eine oder mehrere Schiebevorrichtungen umfassen, die auf beiden Seiten des beweglichen Schlittens (23) in seiner Ruheposition angeordnet sind, wobei die Haltemittel (26) derart auf den beweglichen Schlitten (23) einwirken, dass sie die erforderliche Kraft einstellen, um die Verschiebung des beweglichen Schlittens (23) zu bewirken.

2. Entriegelungsvorrichtung nach Anspruch 1, die ferner ein Verbindungselement (17) zwischen dem Betätigungselement (16) und dem Schneidwerkzeug (O) umfasst.

3. Entriegelungsvorrichtung nach einem der Ansprüche 1 und 2, wobei der Klingenhalter (22) auf dem beweglichen Schlitten (23) montiert ist.

4. Entriegelungsvorrichtung nach einem der Ansprüche 1 bis 3, wobei der bewegliche Schlitten (23) mit dem Betätigungselement (16) verbunden ist.

5. Entriegelungsvorrichtung nach einem der Ansprüche 1 bis 4, wobei jede der einen oder der mehreren Schiebevorrichtungen eine Kugel (29) umfasst, die in eine Nut (30) eingreift, die im beweglichen Schlitten (23) ausgebildet ist.

6. Entriegelungsvorrichtung nach Anspruch 5, wobei jede der einen oder der mehreren Schiebevorrichtungen eine Feder umfasst, die die Kugel (29) in die Nut (30) befördert.

7. Container (C), der mindestens eine Abdeckung (10, 11) umfasst, die in einer Öffnungsposition des Containers (C) aufgeklappt werden kann und dazu ausgestaltet ist, in der Schließposition des Containers (C) eingeklappt zu werden, wobei ein Schließsystem des Containers (C) ein Verbindungsglied (12), vom Typ Leine oder Riemen, insbesondere ein Verbindungsglied, das zwischen Ösen (13) gespannt ist, die in der Abdeckung ausgebildet sind, und das ein erstes Ende, das mit dem Container (C) verbunden ist, und ein gegenüberliegendes Ende, das mit einer Endschlaufe (6) versehen ist, aufweist, und einen Verriegelungsstift (14) umfasst, der in die Endschlaufe (6) eingreift,
**dadurch gekennzeichnet, dass** er eine Entriegelungsvorrichtung nach einem der Ansprüche 1 bis 6 umfasst.

8. Container nach Anspruch 7, der ferner eine Ausziehvorrichtung (15) umfasst, die auf die Abdeckung einwirkt, um diese in die aufgeklappte Position zu befördern.

9. Container nach einem der Ansprüche 7 oder 8, wobei die Verriegelungsvorrichtung an der Abdeckung (10) des Containers (C) in der Achse einer Öse der Abdeckung montiert ist.

10. Container nach Anspruch 7, **dadurch gekennzeichnet, dass** er einen Container darstellt, der einen Fallschirm (P) enthält.

## Claims

1. An unlocking device for a system for closing a parachute container (C) by means of a link (12), of the rope or strap type, in particular a link stretched between eyelets (13), comprising a sharp tool (O) capable of cutting the link (12) to unlock the closing system,
the device including an actuating member (16) connected to the cutting tool (O), said actuating member being manually handled by a user to cause the cutting tool (O) to move into a cutting position of said link (12), the cutting tool (O) comprising at least one blade (21), a blade holder (22), a movable shuttle (23), and retention means (26) acting on the blade holder (22) against a force exerted by the actuating member (16),
**characterised in that** the retention means (26) include one or more push-buttons disposed on either side of the mobile shuttle (23) in its rest position, the retention means (26) acting on the mobile shuttle (23) so as to calibrate the force necessary to cause the movement of the mobile shuttle (23) .

2. The unlocking device according to claim 1, further comprising a connecting element (17) between the actuating member (16) and the cutting tool (O).

3. The unlocking device according to one of claims 1 and 2, wherein the blade holder (22) is mounted on the mobile shuttle (23).

4. The unlocking device according to any one of claims 1 to 3, wherein the mobile shuttle (23) is connected to the actuating member (16).

5. The unlocking device according to any one of claims 1 to 4, wherein each of the one or more push-buttons comprises a ball (29) which engages in a groove (30) made in the mobile shuttle (23).

6. The unlocking device according to claim 5, wherein each of the one or more push-buttons comprises a spring biasing the ball (29) in the groove (30).

7. A container (C) comprising at least one flap (10, 11) deployable in the open position of the container (C) and capable of being folded down in the closed position of the container (C), a container closing system (C) comprising a link (12), of rope or strap type, in particular a link stretched between eyelets (13) made in the flap, having a first end connected to the container (C) and an opposite end provided with an end loop (6), and a locking pin (14) engaging in the end loop (6),
**characterised in that** it includes an unlocking device according to any one of claims 1 to 6.

8. The container according to claim 7, further comprising an extractor device (15) acting on the flap to bias it into the deployed position.

9. The container according to one of claims 7 or 8, wherein the locking device is mounted on the flap (10) of the container (C), in the axis of an eyelet of the flap.

10. The container according to claim 7, **characterised in that** it constitutes a container for containing a parachute (P) .
